# EUROPÄISCHE PATENTSCHRIFT

(11) **EP 4 001 007 B1**
(45) Veröffentlichungstag und Bekanntmachung des Hinweises auf die Patenterteilung: **17.04.2024**
(21) Anmeldenummer: 21204954.8
(22) Anmeldetag: 27.10.2021
(51) Int. Cl.: B60P 1/48, B60P 1/52, B60P 1/64

(54) **ABROLLKIPPERFAHRZEUG MIT VERSTELLBARER TRAGEROLLENEINHEIT**
VEHICLE FOR ROLL-OFF CONTAINER WITH AN ADJUSTABLE BEARING ROLLER UNIT
VÉHICULE À BENNE BASCULANTE POURVU D'UNITÉ DE ROULEAU PORTEUR RÉGLABLE

(30) Priorität: 13.11.2020 DE 102020129987
(43) Veröffentlichungstag der Anmeldung: 25.05.2022
(73) Patentinhaber: Franz Xaver Meiller Fahrzeug- und Maschinenfabrik-GmbH & Co. KG, 80997 München (DE)
(72) Erfinder: BANDILLA, Peter, 82216 Maisach (DE)
(74) Vertreter: Weickmann & Weickmann PartmbB

(56) Entgegenhaltungen:
- JP-A- S59 202 943
- JP-U- S5 735 134
- KR-A- 20020 043 060
- US-A- 5 467 827

## Beschreibung

Die vorliegende Erfindung betrifft ein Abrollkipperfahrzeug, umfassend einen Fahrzeugkörper, eine Handhabungsvorrichtung zum Aufnehmen und Abkippen eines Wechselbehälters auf den Fahrzeugkörper und zum Absetzen des Wechselbehälters von dem Fahrzeugkörper sowie wenigstens einen Auflageabschnitt je Fahrzeugseite mit einer Auflagefläche zum Tragen des aufgenommenen Wechselbehälters.

Es ist bekannt, dass bei vielen Bautypen von Abrollkipperfahrzeugen bei einem Aufnehmen eines Wechselbehälters auf den Fahrzeugkörper und auch bei einem Absetzen des Wechselbehälters von dem Fahrzeugkörper zunächst einmal ein relativ langer Verschiebeweg zurückgelegt werden muss, entlang welchem der Wechselbehälter mit dem Auflageabschnitt in Kontakt steht und über ihn abgleitet. Dies ist insbesondere bei Beginn eines Absetzvorgangs bzw. am Ende eines Aufnahmevorgangs der Fall, wenn der entsprechende Wechselbehälter beispielsweise mittels eines Verschiebezylinders der Handhabungsvorrichtung letztlich in seine endgültige aufgenommene Transportposition überführt wird oder unmittelbar aus dieser herausbewegt wird.

Hierbei hat es sich gezeigt, dass je nach Materialkombination von Wechselbehälter und Auflageabschnitt ein sogenannter "Slip-Stick-Effekt" auftreten kann, in welchem keine kontinuierliche Abgleitbewegung des Wechselbehälters an der Auflagefläche abläuft, sondern vielmehr diese Bewegung ruckweise stattfindet, d. h. mehrfach entlang des Wegs zum Stillstand kommt und dann plötzlich erneut beginnt. Hierbei kann sich das gesamte Fahrzeugsystem in einer Weise aufschaukeln, die von dem Fahrer des Fahrzeugs als unangenehm empfunden wird und zu einem erhöhten Verschleiß einzelner Komponenten davon führen kann, da beispielsweise das Fahrerhaus des Fahrzeugs in eine relativ starke Schwingung versetzt werden kann.

Zur Behebung dieses Problems sind nun im Stand der Technik verschiedene Maßnahmen vorgeschlagen worden, welche jedoch ihrerseits erneut Probleme hervorrufen können.

Beispielsweise ist der Ansatz verfolgt worden, fest installierte Rollen in den Auflageabschnitten vorzusehen, über welche der entsprechende Wechselbehälter dann bei einem Aufnahme- oder Absetzvorgang davon abrollen kann. Zwar behebt diese Maßnahme zunächst einmal die oben beschriebene Problematik einer ruckweisen Bewegung des Wechselbehälters, es zeigt sich jedoch andererseits, dass insbesondere in Ausführungsformen von Abrollkipperfahrzeugen ohne hydraulische Verriegelung des Wechselbehälters in seinem aufgenommenen Transportzustand dieser beim Anfahren oder Bremsen des Fahrzeugs während des Transports des Behälters innerhalb eines gewissen Spiels nach hinten bzw. vorne rollt, da selbstverständlich die Reibung zwischen Fahrzeugkörper und Wechselbehälter durch das Vorsehen der Rollen erheblich reduziert ist. Durch die hohe Trägheit der sich hier relativ zueinander bewegenden Massen stellt eine derartige Bewegung ein erhebliches Sicherheitsrisiko dar, sodass das Vorsehen von stationären Rollen bei Abrollkipperfahrzeugen ohne hydraulische Verriegelung des Wechselbehälters im Wesentlichen ausgeschlossen ist.

Als Alternative ist vorgeschlagen worden, die Auflageabschnitte mit einem Kunststoffmaterial zu versehen, um hier verbessere Reibungseigenschaften zwischen dem entsprechenden Wechselbehälter und dem so verkleidenden Auflageabschnitt zu erzielen. Zwar kann durch diese Maßnahme der oben beschriebene "Slip-Stick-Effekt" ebenfalls erheblich reduziert werden, es zeigt sich jedoch in der Praxis, dass die hierzu verwendeten relative weichen Kunststoffprofile schnell verschleißen und somit häufig ausgetauscht werden müssen, was für Betreiber derartiger Fahrzeuge einen erheblichen Aufwand bedeutet.

Für Beispiele von gattungsgemäßen Abrollkipperfahrzeugen sei insbesondere auf die KR 2002 0043060 A, die JP S57 35134 U und die JP S59 202943 A verwiesen.

Es ist somit die Aufgabe der vorliegenden Erfindung, die oben beschriebenen Nachteile des bekannten Stands der Technik zu beheben und gleichzeitig dennoch sicherzustellen, dass Aufnahme- bzw. Absetzvorgänge von Wechselbehältern in derartigen Fahrzeugen in einer für den Fahrer angenehmen und materialschonenden Weise stattfinden.

Erfindungsgemäß wird zur Lösung dieser Aufgabe vorgeschlagen, in einem Abrollkipperfahrzeug der oben beschriebenen Gattung dem wenigstens einen Auflageabschnitt wenigstens eine Tragerolleneinheit mit wenigstens einer bezüglich der Auflagefläche zwischen einer zurückgezogenen und einer ausgefahrenen Position mittels einer Verlagerungseinheit verlagerbaren Tragerolle zuzuordnen, wobei lediglich in der ausgefahrenen Position der wenigstens einen Tragerolle ein Abrollen des Wechselbehälters daran ermöglicht ist.

Erfindungsgemäß wird demzufolge einerseits ein sicheres Aufliegen des Wechselbehälters auf dem Fahrzeugkörper während eines Transports davon sichergestellt, wenn die wenigstens eine verlagerbare Tragerolle in ihrer zurückgezogenen Position befindlich ist, während andererseits durch ein Ausfahren davon ein sauberes Abrollen des Behälters bei seiner Handhabung durch die Handhabungsvorrichtung ermöglicht wird.

Wenngleich die konkrete Positionierung der einzelnen Komponenten des Abrollkipperfahrzeugs selbstverständlich von dessen genauem Bautyp und ferner weiteren Parametern davon wie einer maximalen Tragelast oder einem maximalen Hub der Handhabungsvorrichtung abhängen können und demzufolge vom Fachmann entsprechend abstimmbar sind, so können in einer bevorzugten Ausführungsform wenigstens zwei Auflageabschnitte vorgesehen sein, welche sich in Fahrzeug-Breitenrichtung an beiden Seiten der Handhabungsvorrichtung erstrecken. Durch diese Maßnahme wird eine symmetrische Auflage für den Wechselbehälter sowohl in dessen Transportposition auf dem Fahrzeugkörper als auch bei einer Handhabung durch die Handhabungsvorrichtung geschaffen. In dieser Ausführungsform kann dann selbstverständlich jedem der Auflageabschnitte wenigstens eine Tragerolleneinheit zugeordnet sein, welche einander aus Gründen einer symmetrischen Krafteinleitung in den Fahrzeugkörper symmetrisch bezüglich der Fahrzeug-Längsrichtung in der Fahrzeug-Breitenrichtung paarweise gegenüberliegen können.

Erfindungsgemäß umfasst aus Gründen einer verbesserten Krafteinleitung bzw. Kraftaufnahme durch die wenigstens eine Tragerolleneinheit diese wenigstens zwei einzelne Tragerollen, deren Achsen parallel ausgerichtet und zueinander ortsfest sind. Demzufolge kann insbesondere ein Rollenblock vorgesehen sein, an welchem die mehreren einzelnen Tragerollen jeweils in einer drehbaren Weise an ihren beiden Enden in Halterungen aufgenommen sind, die einen integralen Teil des insgesamt verlagerbaren Blocks bilden.

Bei der Betätigungsweise der Verlagerungseinheit der wenigstens einen Tragerolleneinheit kann ferner auf unterschiedliche Alternativen zurückgegriffen werden, insbesondere könnte diese jedoch elektromechanisch, beispielsweise mittels eines Linearaktuators, oder hydraulisch über einen geeigneten Hydraulikzylinder betätigbar sein.

Zwar ist es selbstverständlich denkbar, den Betrieb der entsprechenden wenigstens einen Verlagerungseinheit manuell über ein entsprechendes Bedienelement auszulösen, um bei einer bevorstehenden Handhabung des Wechselbehälters zunächst einmal die wenigstens eine Tragerolle in ihre ausgefahrene Position zu überführen, in einer besonders anwenderfreundlichen Variante könnten jedoch auch Mittel zum Koordinieren des Betriebs der Handhabungsvorrichtung und der wenigstens einen Verlagerungseinheit vorgesehen sein. Demzufolge würde dann bei einer Inbetriebnahme der Handhabungsvorrichtung zum Aufnehmen oder Absetzen eines Wechselbehälters die wenigstens eine Tragerolleneinheit automatisch ebenfalls betätigt werden und die entsprechende wenigstens eine Tragerolle in ihre ausgefahrene Position überführt werden.

Wenngleich diese Mittel zum Koordinieren beispielsweise durch eine Steuereinheit ausgebildet sein können, welche insbesondere im Fall einer elektromechanisch betätigbaren Verlagerungseinheit eine entsprechende koordinierte Ansteuerung davon bewerkstelligen kann, so können in einer Variante des erfindungsgemäßen Abrollkipperfahrzeugs, in welcher sowohl die Handhabungsvorrichtung als auch die wenigstens eine Verlagerungseinheit hydraulisch betätigbar sind und mittels eines gemeinsamen Hydraulikkreises versorgt werden, die Mittel zum Koordinieren des Betriebs wenigstens ein Vorspannventil umfassen, welches bei einem Anlegen eines Hydraulikdrucks zum Betreiben der Handhabungsvorrichtung ebenfalls einen Hydraulikdruck zum Betreiben der wenigstens einen Verlagerungseinheit bereitstellt, um die entsprechende Tragerolleneinheit zu betätigen und ihre wenigstens eine Tragerolle in die ausgefahrene Position zu überführen. Diese Variante zeichnet sich durch ihren hohen Integrationsgrad und ihre günstige sowie zuverlässige Bauweise aus.

Hierbei kann die wenigstens eine Verlagerungseinheit dazu eingerichtet sein, in einem drucklosen Zustand einen Übergang der entsprechenden wenigstens einen Tragerolle in den zurückgezogenen Zustand durch die Wirkung der Schwerkraft zu erlauben oder mittels eines Vorspannelements hervorzurufen. Hierbei reicht dann beispielsweise ein einfach betätigbarer Hydraulikzylinder zum Verlagern der wenigstens einen Tragerolle in ihre ausgefahrenen Position aus, da das Zurücksetzen davon in die zurückgezogene Position nicht aktiv durch dieses hydraulische Element angetrieben werden muss.

Weitere Merkmale und Vorteile der vorliegenden Erfindung werden aus der nachfolgenden Beschreibung einer Ausführungsform davon deutlich, wenn diese zusammen mit den beiliegenden Figuren betrachtet wird. Diese zeigen im Einzelnen:
- Fig. 1:: ein erfindungsgemäßes Abrollkipperfahrzeug in einer isometrischen Ansicht von schräg hinten;
- Fig. 2:: eine Detailansicht einer der in dem Fahrzeug aus Figur 1 vorgesehenen Tragerolleneinheiten;
- Fig. 3:: eine weitere Detailansicht der Tragerolleneinheit aus Figur 2; und
- Fig. 4:: ein schematischer Hydraulik-Schaltplan zur Ansteuerung von hydraulischen Komponenten des Abrollkipperfahrzeugs aus Fig. 1.

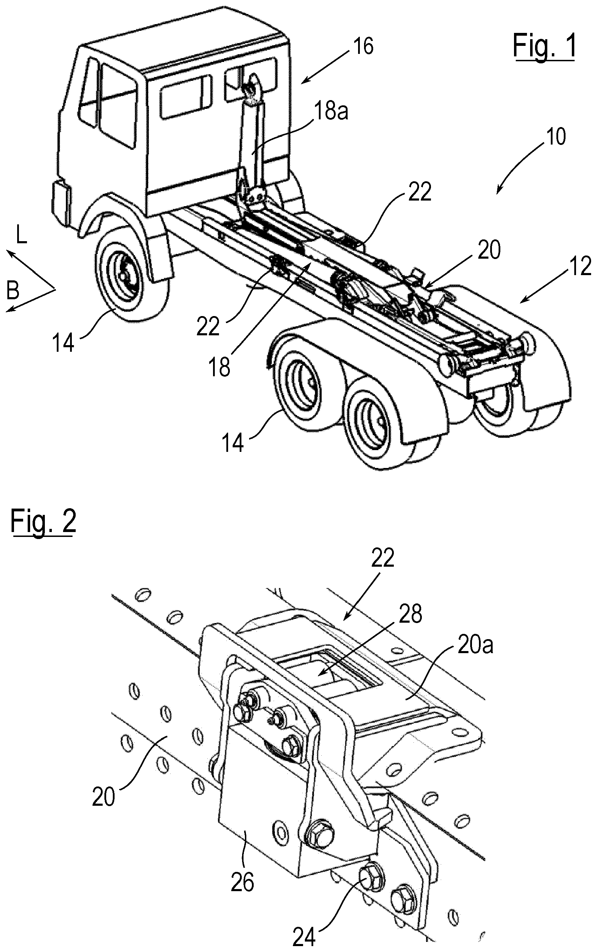

In Figur 1 ist zunächst einmal ein erfindungsgemäßes Abrollkipperfahrzeug gezeigt und ganz allgemein mit dem Bezugszeichen 10 bezeichnen, welches einen Fahrzeugkörper 12, drei Achsen mit entsprechenden Rädern 14 sowie eine Fahrerkabine 16 aufweist, in welcher ein Fahrer des Abrollkipperfahrzeugs 10 während eines Betriebs davon Platz nimmt.

Ferner ist dem Fahrzeugkörper 12 zugeordnet eine Handhabungsvorrichtung 18 dargestellt, welche hydraulisch dazu betätigbar ist, einen in Figur 1 nicht dargestellten Wechselbehälter auf den Fahrzeugkörper 12 mittels ihres Tragearms 18a aufzunehmen und wieder von diesem abzusetzen, wobei der Wechselbehälter in einer Transportposition davon auf dem Grundrahmen 20 zugeordneten Auflageabschnitten mit jeweiligen Auflageflächen 20a aufliegt, welche sich in Fahrzeugbreitenrichtung B beiderseits der Handhabungsvorrichtung 18 entlang der Längsrichtung L des Fahrzeugs 10 erstrecken und aus Gründen der Übersichtlichkeit lediglich in Figur 2 bezeichnet sind.

Ferner ist in Figur 2 ebenfalls zu erkennen, dass jede der Auflageflächen 20a in symmetrischer Weise einer jeweiligen Tragerolleneinheit 22 zugeordnet ist, welche erfindungsgemäß dazu betätigbar ist, bei Aufnahme- bzw. Absetzvorgängen von Wechselbehältern ein entsprechendes Paar von Tragerollen 28 in vertikaler Richtung über die jeweilige Auflagefläche 20a hinaus auszufahren, um ein Abrollen des Wechselbehälters daran zu ermöglichen.

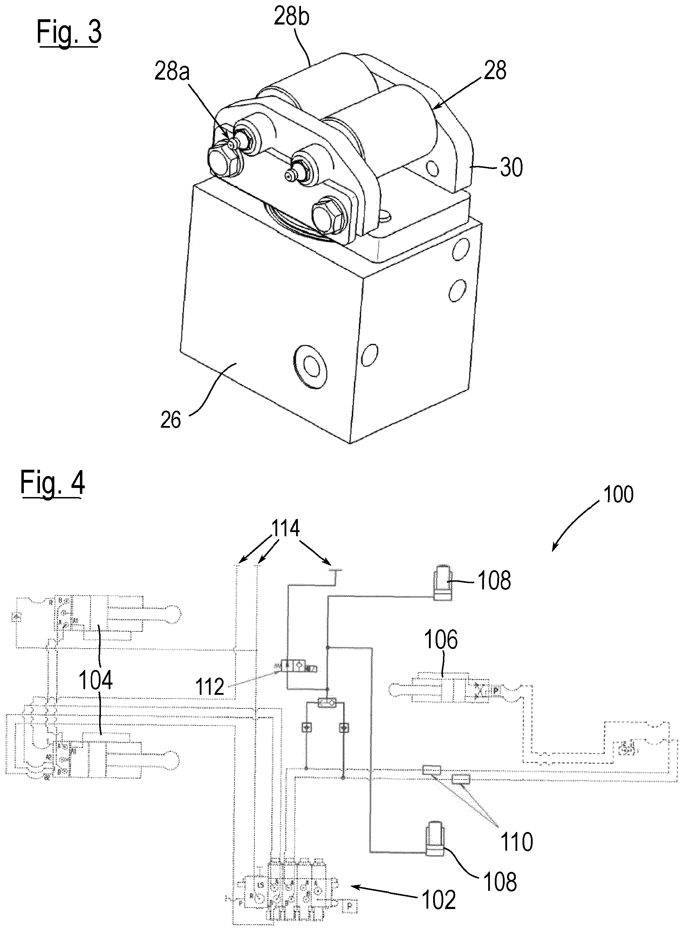

Für eine genauere Beschreibung der Funktionsweise der Tragerolleneinheiten 22 sei nun auf die Figuren 2 und 3 verwiesen, in welchen jeweils eine Tragerolleneinheit 22 in montierter und vergrößerter Ansicht bzw. in einer demontierten Detailansicht gezeigt ist. In Figur 2 ist zunächst zu erkennen, dass die Tragerolleneinheit 22 mit dem Grundrahmen 20 über eine Verschraubung 24 verbunden ist, wobei in anderen Varianten von erfindungsgemäßen Fahrzeugen jedoch beispielsweise auch eine Schweißverbindung zum Einsatz kommen könnte. Weiterhin umfasst die Tragerolleneinheit 22 einen blockförmigen Körper 26, in welchem eine Verlagerungseinheit zum Verlagern der beiden Tragerollen 28 aufgenommen ist, beispielsweise ein einfach wirkender Hydraulikzylinder, welcher über Vorspannventile mit dem zur Betätigung der Handhabungsvorrichtung 18 vorgesehenen Hydraulikkreis gekoppelt ist, wie weiter unten noch anhand von Fig. 4 erläutert werden wird.

Hierbei sind die beiden Rollen 28 derart mit einem durch die angesprochene Verlagerungseinheit verlagerbaren Rollenblock 30 verbunden, dass ihre jeweiligen Achsen 28a parallel zueinander ausgerichtet sind und ihre Rollenflächen 28b sich in vertikaler Richtung gleich weit nach oben erstrecken. Auf diese Weise wird in der ausgefahrenen Position der Tragerolleneinheit 22 ein sauberes Abrollen des Wechselbehälters bei einer Handhabung davon sowie ein gleichmäßiger Krafteintrag in den Fahrzeugkörper 12 währenddessen gewährleistet. Insbesondere kann die Verlagerungseinheit derart ausgebildet sein, dass bei einem Absinken des Hydraulikdrucks nach dem Ende der Betätigung der Handhabungsvorrichtung 18 ein Ventil für einen Hydrauliktank öffnet, sodass die Tragerolleneinheit 22 allein durch die Wirkung der Schwerkraft bzw. durch das Gewicht des aufgenommenen Wechselbehälters zurück in ihre zurückgezogene Position verschoben wird.

Eine beispielhafte Ausgestaltung einer Hydraulikeinrichtung 100 mit der beschriebenen Funktionsweise ist rein schematisch in Fig. 4 dargestellt und soll im Folgenden beschrieben sein. Hierbei umfasst die Hydraulikeinrichtung 100 eine nicht dargestellte Druckquelle, welche derart über ein Steuerventil 102 steuerbar ist, dass im Rahmen eines Arbeitsablaufs zur Betätigung der Handhabungseinheit 18 selektiv zwei Schwenkzylinder 104 und ein Verschiebezylinder 106 angesteuert werden können, welche jeweils Komponenten der Handhabungseinheit 18 bilden. Insbesondere bewirken die Schwenkzylinder 104 das eigentliche Überführen des Wechselbehälters von dem Fahrzeugkörper 12 weg und zu diesem hin mittels einer Schwenkbewegung des Arms 18a, während der Verschiebezylinder 106 die Länge des Arms 18a variiert und daher eine Betätigung des Verschiebezylinders 106 mit dem oben beschriebenen Abgleiten des Wechselbehälters an den Auflageflächen 20a zusammenhängt.

Um nun die oben beschriebene Betätigung der Komponenten der Tragerolleneinheiten 22 bildenden Hubzylinder 108 in koordinierter Weise mit einer Betätigung des Verschiebezylinders 106 zu bewirken, sind an geeigneten Stellen der Hydraulikeinrichtung 100 zwei Vorspannventile 110 vorgesehen, welche beispielsweise auf einen Druck von 120 bar eingestellt sein können. Weiterhin ist ein schaltbares Ventil 112 vorgesehen, welches in einem drucklosen Zustand des Verschiebezylinders 106 und der Hubzylinder 108 einen Anschluss 114 zu einem nicht dargestellten Hydrauliktank öffnet und hierzu über die Druckquelle und das Steuerventil 102 gekoppelt ist. Weitere Anschlüsse zu diesem Tank zum Schließen des Hydraulikkreises sind in Fig. 4 ebenfalls mit dem Bezugszeichen 114 bezeichnet.

## Patentansprüche

1. Abrollkipperfahrzeug (10), umfassend:
- einen Fahrzeugkörper (12);
- eine Handhabungsvorrichtung (18) zum Aufnehmen eines Wechselbehälters auf den Fahrzeugkörper (12) und zum Absetzen des Wechselbehälters von dem Fahrzeugkörper (12); und
- wenigstens einen Auflageabschnitt mit einer Auflagefläche (20a) zum Tragen des aufgenommenen Wechselbehälters;
wobei dem wenigstens einen Auflageabschnitt wenigstens eine Tragerolleneinheit (22) mit wenigstens einer bezüglich der Auflagefläche (20a) zwischen einer zurückgezogenen Position und einer ausgefahrenen Position mittels einer Verlagerungseinheit verlagerbaren Tragerolle (28) zugeordnet ist, wobei lediglich in der ausgefahrenen Position der wenigstens einen Tragerolle (28) ein Abrollen des Wechselbehälters daran ermöglicht ist,
**dadurch gekennzeichnet, dass** die oder wenigstens eine der Tragerolleneinheiten (22) wenigstens zwei einzelne Tragerollen (28) umfasst, deren Achsen (28a) parallel ausgerichtet und zueinander ortsfest sind, wobei die Tragerollen (28) derart mit einem durch die Verlagerungseinheit verlagerbaren Rollenblock (30) verbunden sind, dass sich ihre Rollenflächen (28b) in vertikaler Richtung gleich weit nach oben erstrecken.

2. Abrollkipperfahrzeug (10) nach Anspruch 1,
**dadurch gekennzeichnet, dass** wenigstens zwei Auflageabschnitte vorgesehen sind, welche sich in Fahrzeug-Breitenrichtung (B) an beiden Seiten der Handhabungsvorrichtung (18) erstrecken.

3. Abrollkipperfahrzeug (10) nach Anspruch 2,
**dadurch gekennzeichnet, dass** jedem der Auflageabschnittewenigstens eine Tragerolleneinheit (22) zugeordnet ist, welche einander symmetrisch bezüglich der Fahrzeug-Längsrichtung (L) in der Fahrzeug-Breitenrichtung (B) paarweise gegenüberliegen.

4. Abrollkipperfahrzeug (10) nach einem der vorhergehenden Ansprüche,
**dadurch gekennzeichnet, dass** die Verlagerungseinheit der wenigstens einen Tragerolleneinheit (22) elektromechanisch oder hydraulisch betätigbar ist.

5. Abrollkipperfahrzeug (10) nach einem der vorhergehenden Ansprüche,
**dadurch gekennzeichnet, dass** Mittel zum Koordinieren des Betriebs der Handhabungsvorrichtung (18) und der wenigstens einen Verlagerungseinheit vorgesehen sind.

6. Abrollkipperfahrzeug (10) nach Anspruch 5,
**dadurch gekennzeichnet, dass** sowohl die Handhabungsvorrichtung (18) als auch die wenigstens eine Verlagerungseinheit hydraulisch betätigbar sind und mittels eines gemeinsamen Hydraulikkreises (100) versorgt werden, wobei die Mittel zum Koordinieren des Betriebs durch wenigstens ein Vorspannventil (110) gebildet sind, welches bei einem Anlegen eines Hydraulikdrucks zum Betreiben der Handhabungsvorrichtung (18) ebenfalls einen Hydraulikruck zum Betrieben der wenigstens einen Verlagerungseinheit bereitstellt, um die wenigstens eine Tragerolle (28) der entsprechenden Tragerolleneinheit (22) in die ausgefahrene Position zu überführen.

7. Abrollkipperfahrzeug (10) nach Anspruch 6,
**dadurch gekennzeichnet, dass** die wenigstens eine Verlagerungseinheit dazu eingerichtet ist, in einem drucklosen Zustand einen Übergang der wenigstens einen Tragerolle (28) der entsprechenden Tragerolleneinheit (22) in den zurückgezogenen Zustand durch die Wirkung der Schwerkraft zu erlauben oder mittels eines Vorspannelements hervorzurufen.

## Claims

1. Roll-off tipper vehicle (10), comprising:
- a vehicle body (12);
- a handling device (18) for receiving a swap container on the vehicle body (12) and for removing the swap container from the vehicle body (12); and
- at least one contact portion having a contact surface (20a) for carrying the received swap container;
the at least one contact portion being associated with at least one conveyor roller unit (22) having at least one conveyor roller (28) that is displaceable, by means of a displacement unit, between a retracted position and an extended position, with respect to the contact surface (20a), rolling of the swap container thereon being made possible only in the extended position of the at least one conveyor roller (28), **characterised in that** the or at least one of the conveyor roller units (22) comprises at least two individual conveyor rollers (28), the shafts (28a) of which are oriented in parallel and so as to be fixed in position relative to one another, the conveyor rollers (28) being connected to a roller block (30), which is displaceable by the displacement unit, in such a way that the roller surfaces (28b) thereof extend upwards the same amount in the vertical direction.

2. Roll-off tipper vehicle (10) according to claim 1,
**characterised in that** at least two contact portions are provided, which extend on both sides of the handling device (18), in the vehicle width direction (B).

3. Roll-off tipper vehicle (10) according to claim 2,
**characterised in that** each of the contact portions is associated with at least one conveyor roller unit (22), which are opposite one another in pairs in the vehicle width direction (B), in a symmetrical manner with respect to the vehicle longitudinal direction (L).

4. Roll-off tipper vehicle (10) according to any of the preceding claims,
**characterised in that** the displacement unit of the at least one conveyor roller unit (22) is electromechanically or hydraulically actuatable.

5. Roll-off tipper vehicle (10) according to any of the preceding claims,
**characterised in that** means for coordinating the operation of the handling device (18) and the at least one displacement unit are provided.

6. Roll-off tipper vehicle (10) according to claim 5,
**characterised in that** both the handling device (18) and the at least one displacement unit are hydraulically actuatable and are supplied by means of a common hydraulic circuit (100), the means for coordinating the operation being formed by at least one bias valve (110) which, in the event of application of a hydraulic pressure for operating the handling device (18), also provides a hydraulic pressure for operating the at least one displacement unit, in order to transfer the at least one conveyor roller (28) of the corresponding conveyor roller unit (22) into the extended position.

7. Roll-off tipper vehicle (10) according to claim 6,
**characterised in that** the at least one displacement unit is designed, in a pressure-free state, to allow a transition of the at least one conveyor roller (28) of the corresponding conveyor roller unit (22) into the retracted state under the action of gravity, or to bring about said transition by means of a preload element.

## Revendications

1. Véhicule à benne amovible sur galets (10), comprenant :
- un corps de véhicule (12) ;
- un dispositif de manipulation (18) pour charger un conteneur interchangeable sur le corps de véhicule (12) et pour décharger le conteneur interchangeable depuis le corps de véhicule (12) ; et
- au moins une portion de support ayant une surface de support (20a) pour porter le conteneur interchangeable chargé ;
dans lequel
au moins une unité de galet porteur (22) est associée à ladite au moins une portion de support, ladite unité ayant au moins un galet porteur (28) déplaçable par rapport à la surface de support (20a) entre une position rétractée et une position déployée au moyen d'une unité de déplacement, un mouvement de roulement du conteneur interchangeable sur ledit au moins un galet porteur (28) étant possible uniquement dans la position déployée de ce dernier,
**caractérisé en ce que** ladite ou au moins l'une des unités de galets porteurs (22) comprend au moins deux galets porteurs individuels (28) dont les axes (28a) sont orientés parallèlement et sont fixes l'un par rapport à l'autre, les galets porteurs (28) étant reliés à un bloc de galets (30) déplaçable par l'unité de déplacement de telle sorte que leurs surfaces de roulement (28b) s'étendent vers le haut à la même distance dans le sens vertical.

2. Véhicule à benne amovible sur galets (10) selon la revendication 1,
**caractérisé en ce qu'**il est prévu au moins deux portions de support qui s'étendent dans le sens de la largeur (B) du véhicule de part et d'autre du dispositif de manipulation (18).

3. Véhicule à benne amovible sur galets (10) selon la revendication 2,
**caractérisé en ce qu'**au moins une unité de galet porteur (22) est associée à chacune des portions de support, qui, dans le sens de la largeur (B) du véhicule, sont opposées par paires les unes aux autres, symétriquement par rapport au sens longitudinal (L) du véhicule.

4. Véhicule à benne amovible sur galets (10) selon l'une des revendications précédentes,
**caractérisé en ce que** l'unité de déplacement de ladite au moins une unité de galet porteur (22) peut être actionnée par voie électromécanique ou hydraulique.

5. Véhicule à benne amovible sur galets (10) selon l'une des revendications précédentes,
**caractérisé en ce qu'**il est prévu des moyens de coordination du fonctionnement du dispositif de manipulation (18) et de ladite au moins une unité de déplacement.

6. Véhicule à benne amovible sur galets (10) selon la revendication 5,
**caractérisé en ce que** tant le dispositif de manipulation (18) que ladite au moins une unité de déplacement peuvent être actionnés par voie hydraulique et sont alimentés au moyen d'un circuit hydraulique commun (100), les moyens de coordination du fonctionnement étant formés par au moins une soupape de précontrainte (110) qui, lors de l'application d'une pression hydraulique pour le fonctionnement du dispositif de manipulation (18), fournit également une pression hydraulique pour le fonctionnement de ladite au moins une unité de déplacement, afin de transférer ledit au moins un galet porteur (28) de l'unité de galet porteur correspondante (22) vers la position déployée.

7. Véhicule à benne amovible sur galets (10) selon la revendication 6,
**caractérisé en ce que** ladite au moins une unité de déplacement est adaptée pour permettre, dans un état sans pression, un passage dudit au moins un galet porteur (28) de l'unité de galet porteur correspondante (22) à l'état rétracté par l'action de la gravité, ou pour le provoquer au moyen d'un élément de précontrainte.
